# FASCICULE DE BREVET EUROPEEN

(11) **EP 0 622 660 B1**
(45) Date de publication et mention de la délivrance du brevet: **17.09.1997**
(21) Numéro de dépôt: 93401112.3
(22) Date de dépôt: 29.04.1993
(51) Int. Cl.: G02F 1/161, G02F 1/163, G02F 1/155

(54) **Vitrage électrochrome**
Elektrochrome Verglasung
Electrochromic window

(43) Date de publication de la demande: 02.11.1994
(73) Titulaire: SAINT-GOBAIN VITRAGE, 92400 Courbevoie (FR)
(72) Inventeur: Defendini, Francis, F-92500 Rueil Malmaison (FR)
(74) Mandataire: Muller, René

(56) Documents cités:
- PATENT ABSTRACTS OF JAPAN vol. 10, no. 157 (P-464)6 Juin 1986 & JP-A-61 011 727
- PATENT ABSTRACTS OF JAPAN vol. 13, no. 395 (P-927)4 Septembre 1989 & JP-A-01 142 621
- PATENT ABSTRACTS OF JAPAN vol. 16, no. 305 (P-1380)6 Juillet 1992 & JP-A-04 083 234
- APPLIED PHYSICS LETTERS. vol. 37, no. 1, Juillet 1980, NEW YORK US pages 106 - 108 G.BENI 'SHORT-CIRCUIT MEMORY IN ELECTROCHROMIC DISPLAYS'

## Description

L'invention concerne les vitrages à commande électrique du type électrochrome, c'est-à-dire les vitrages dont la coloration peut être modifiée sous l'effet d'un champ électrique.

Leur principe de fonctionnement est basé sur l'utilisation d'une couche d'un matériau à propriété électrochrome, qui est capable d'insérer de manière réversible des cations, notamment des protons H⁺ ou des cations lithium Li⁺, et de ce fait passer d'un degré d'oxydation à un autre, sachant que chacun des degrés d'oxydation correspond à un état de coloration différent.

Ainsi, le trioxyde de tungstène, pratiquement incolore dans son état oxydé (a), devient d'une coloration soutenue bleu-nuit dans son état réduit (b) en insérant des protons ou des cations Li⁺ selon la réaction suivante :

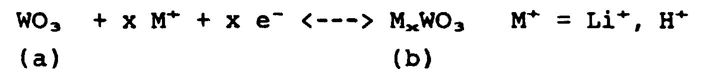

Pour rendre possible ces changements de coloration réversibles, les vitrages électrochromes comportent deux substrats en verre entre lesquels on dispose deux couches électroconductrices transparentes munies d'amenées de courant, séparées successivement par une électrode constituée d'un matériau électrochrome dit cathodique tel que l'oxyde de tungstène, une contre-électrode, qui peut également être constituée d'un matériau électrochrome dit anodique comme l'oxyde d'iridium ou l'oxyde de nickel et une couche d'électrolyte qui permet le transfert des cations en question d'une électrode à l'autre.

En utilisant en tant que contre-électrode de l'oxyde d'iridium, celui-ci, contrairement à l'électrode, est incolore à l'état réduit (b) où sont insérés des protons H⁺ et gris-jaune à l'état oxydé (a) où il est dépourvu de protons H⁺, ce qui renforce le contraste de coloration du vitrage, selon la réaction suivante :

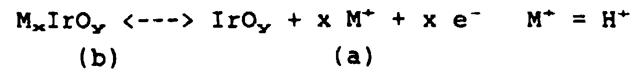

Une contre-électrode à base d'oxyde de nickel peut quant à elle, soit insérer des protons tout comme l'oxyde d'iridium, soit des cations lithium, comme il est connu de la demande de brevet EP-A-0 373 020 avec un schéma réactionnel plus complexe impliquant l'existence de plusieurs équilibres électrochromes.

De manière schématique, en imposant une différence de potentiel, à la valeur et à la polarité voulues, aux deux couches électroconductrices, un transfert cationique s'effectue au travers de l'électrolyte d'une électrode à l'autre, engendrant une réaction d'insertion ou désinsertion desdits cations et donc une modification de l'aspect coloré global du vitrage. La mise au point d'un système d'alimentation électrique est donc cruciale pour le fonctionnement correct du vitrage. C'est ainsi que par exemple la demande de brevet européen EP-A-408 427 propose un système d'alimentation optimisant les temps de commutation du matériau électrochrome en disposant trois amenées de courant selon un montage type potentiostat et en imposant une différence de potentiel programmable et variable en fonction du temps. (On entend par temps de commutation le temps s'écoulant lors du passage d'un état de coloration donné à un autre état plus ou moins coloré que celui de départ). On peut ainsi compenser le phénomène de chutes ohmiques qui se produisent dans les couches électroconductrices, difficiles à éviter lorsqu'il s'agit de grands vitrages.

Ce document procède donc à une modulation de la différence de potentiel imposée, qui permet de maîtriser le degré de coloration et le temps de commutation voulus.

De tels vitrages sont particulièrement intéressants pour équiper bâtiments ou véhicules afin de contrôler l'apport solaire, et leurs applications envisagées tendent à se diversifier largement. Mais se pose alors un nouveau problème : le bon fonctionnement du vitrage électrochrome repose pour l'essentiel sur une alimentation électrique correcte et maîtrisée.

En cas de dysfonctionnement du réseau électrique, par exemple en cas d'une déconnexion accidentelle d'une des amenées de courant ou même d'une fêlure du vitrage ou d'un décollement de sérigraphie, si le matériau électrochrome est alors relativement ou fortement coloré, l'opérateur n'a plus la possibilité de commander son retour à l'état pas ou peu coloré en un laps de temps rapide. Il ne peut qu'attendre un phénomène d'auto-décharge du système, phénomène heureusement à la cinétique extrêmement lente, d'au moins plusieurs jours, qui tend à faire retourner le matériau électrochrome de l'électrode dans son état d'auto-stabilité, qui correspond à son état quasiment complètement décoloré. Cette auto-décharge peut avoir différentes causes, plus ou moins élucidées et intrinsèques à la nature des couches utilisées dans l'empilement du système électrochrome : on peut vraisemblablement supposer que la couche d'électrolyte, qui est conductrice de cations, n'est pas un isolant électronique parfait par exemple. On peut aussi éventuellement penser à de faibles courts-circuits entre les couches électroconductrices.

Or il peut se révéler important de pouvoir retourner très rapidement à l'état décoloré, ou pratiquement décoloré, en cas de défectuosité d'alimentation électrique. Ceci est d'autant plus vrai quand la sécurité peut être mise en jeu, lorsque l'on veut utiliser ces vitrages électrochromes pour équiper des véhicules, et notamment des cockpits d'avion ou des locomotives de trains, ou même lorsque ces vitrages équipent des rétroviseurs d'automobiles.

C'est pourquoi le but de l'invention est de proposer des vitrages électrochromes qui, en cas de problème d'alimentation électrique, peuvent retourner à un état nettement décoloré dans un délai très court, par exemple d'au plus quelques minutes.

Les auteurs de l'invention ont voulu détourner à leur profit le phénomène d'auto-décharge des vitrages électrochromes pour atteindre leur but. Ils ont volontairement créé un court-circuit permament entre les deux couches électroconductrices transparentes, de manière à créer une décharge du système électrochrome lorsque le matériau électrochrome cathodique est dans son état oxydé et coloré. Cette "décharge" provoquée volontairement est bien sûr beaucoup plus importante, et sans commune mesure avec le phénomène d'auto-décharge très lent souvent rencontré dans les systèmes électrochromes. Parallèlement, ils ont compensé ce transfert électronique tendant à supprimer la différence de potentiel imposée au système par une alimentation électrique adaptée.

Ainsi, lorsque la couche de matériau électrochrome cathodique est colorée, s'il arrive que l'alimentation électrique soit défectueuse et qu'aux couches électroductrices plus aucune différence de potentiel ne puisse être appliquée, la décharge par court-circuit, qui n'est plus de ce fait compensée, conduit rapidement le matériau électrochrome vers son état de stabilité chimique, c'est-à-dire un état décoloré, à tout le moins très proche de son état décoloré maximal.

Donc, deux points sont importants pour réaliser l'invention : d'une part, créer une décharge contrôlée, d'autre part, la compenser par une alimentation électrique adéquate.

Le vitrage électrochrome selon l'invention comporte deux feuilles de verre revêtues chacune d'une couche électroconductrice transparente séparées l'une de l'autre successivement par une électrode en matériau électrochrome cathodique, un électrolyte et une contre-électrode. Ces couches électroconductrices sont reliées d'une part par au moins deux amenées de courant à un système d'alimentation électrique générant une différence de potentiel adaptée au changement de coloration voulu du matériau électrochrome. Ces couches électroconductrices munies d'amenées sont d'autre part reliées l'une à l'autre au niveau d'au moins une partie de leur périphérie par l'intermédiaire d'un matériau conducteur électronique dont la conductivité peut notamment être comprise entre 10⁻¹ et 10⁺³ohm⁻¹.cm⁻¹, et de préférence d'environ 10⁺²ohm⁻¹.cm⁻¹.

Au niveau de ce matériau conducteur transitent donc directement des électrons d'une couche électroconductrice à l'autre, transit que l'on maîtrise, puisque l'on choisit la conductivité du matériau, ses caractéristiques dimensionnelles, et, de par sa disposition, la manière dont il relie électriquement lesdites couches électroconductrices. On peut ainsi disposer ce matériau afin qu'il soit en contact, au moins en partie, avec au moins deux amenées de courant.

On pourrait en fait le représenter sous la forme d'une différence de potentiel de polarité inverse de celle imposée aux couches électroconductrices lors de la commutation du matériau électrochrome vers un état plus coloré. On évalue et on contrôle ainsi précisément cette décharge.

Un matériau conducteur électronique peut avantageusement être constitué d'une matrice polymérique au sein de laquelle sont noyées des particules conductrices. Cette matrice polymérique peut ainsi être à base de caoutchouc butyl et/ou polyisobutylène, de polysulfure ou de polyuréthane, tandis que l'on peut choisir les particules conductrices parmi des particules de graphite tel que le noir de carbone, le noir d'acétylène et/ou des particules métalliques. Généralement, le pourcentage volumique de ces particules conductrices par rapport à l'ensemble des particules et de la matrice polymérique est de préférence compris entre 10 et 20 %.

On peut ainsi aisément sélectionner la conductivité électronique dudit matériau en dosant la quantité de particules par rapport à la quantité de polymère.

On garde la maîtrise de la décharge également en choisissant la disposition de ce matériau conducteur vis-à-vis des couches électroconductrices et de leurs amenées de courant.

En effet, si l'on utilise le montage potentiostat préconisé dans la demande de brevet européen EP-A-408 427 pré-citée, chacune desdites couches est munie d'une amenée de courant, les deux amenées diagonalement opposées étant disposées sur la longueur du vitrage électrochrome. Il peut exister également une amenée désignée comme point de référence, le potentiel électrique imposé entre les deux amenées permettant de s'assurer du potentiel souhaité entre l'une des amenées et le point de référence qui se trouve en vis-à-vis.

Le mode de réalisation préféré de l'invention concerne un matériau à matière polymérique présent à la périphérie du vitrage et qui remplit simultanément la fonction de joint d'étanchéité à l'eau liquide et/ou vapeur ; joint qui, de toute manière, est indispensable pour protéger l'empilement des couches du vitrage électrochrome des aggressions extérieures. Le matériau peut alors contenir, outre les particules conductrices, du desséchant type tamis moléculaire. On simplifie ainsi le montage du vitrage. Mais ce matériau conducteur peut également être disposé sur le pourtour du vitrage uniquement en certains points répartis judicieusement.

Dans un cas comme dans l'autre, il doit assurer une liaison électrique entre les deux couches électroconductrices, en évitant cependant de créer un court-circuit franc d'une couche à l'autre, ce qui endommagerait le système électrochrome. D'une manière générale, on contrôle le taux et la cinétique de la décharge par l'ajustement de la conductivité du matériau conducteur et par la longueur du "chemin électrique" que crée ce matériau d'une couche à l'autre.

Pour compenser, au moins pour l'essentiel, cette décharge permanente par transfert électronique à travers ce matériau, lors du fonctionnement normal du vitrage, il faut adapter la différence de potentiel imposée aux couches électroconductrices, aussi bien lors d'une phase de coloration ou décoloration que lors du maintien à une coloration donnée du matériau électrochrome.

C'est à la fois par le choix du matériau conducteur et de l'alimentation électrique que l'on peut alors selon l'invention opérer un compromis selon les applications envisagées.

En effet, plus on souhaite un "temps de retour" rapide du vitrage électrochrome à son état décoloré en cas de problème d'alimentation électrique, et plus il faudra prévoir un matériau dont la conductivité élevée et la configuration propice engendreront une décharge importante. Cependant, on ne peut accentuer ce phénomène de décharge que jusqu'à une certaine limite, car il faut, dans chaque cas, adapter la puissance de l'alimentation électrique du vitrage dont le fonctionnement normal ne doit pas se trouver perturbé.

Comme on l'explicitera ci-après, on ne peut pas toujours simplement se contenter d'appliquer une tension électrique supérieure qui compenserait en quelque sorte cette décharge : compte-tenu des surtensions aux interfaces, tout couple d'oxydo-réduction comme WO₃/IrO_{y} ou WO₃/oxyde de nickel connaît des limites de stabilité électrochimique au-delà desquelles les matériaux risquent de se détériorer.

En pratique, on impose usuellement des valeurs de tension "maximales" compte-tenu de ces limites intrinsèques au système électrochrome afin d'obtenir le contraste maximal entre l'état coloré et décoloré du vitrage. Aller au-delà avec un montage potentiostat risquerait de dégrader le dispositif, et pour commencer les zones périphériques des couches de matériaux électrochromes. Mais il ne faut cependant pas, par une alimentation électrique insuffisante, créer des inhomogénéités de coloration sur la surface du vitrage lorsqu'il est maintenu notamment en état coloré.

Une fois "le temps de retour" déterminé par l'utilisateur, celui-ci devra donc choisir son alimentation électrique au mieux en fonction du paramètre qu'il considère le plus important (économie d'énergie électrique, homogénéité de surface parfaite ou non ...) et des matériaux électrochromes utilisés dans le vitrage.

Avec le système selon l'invention, le "temps de retour" peut ainsi facilement être aussi court que le temps nécessaire au vitrage pour passer de l'état décoloré à l'état coloré sous l'effet de la différence de potentiel imposée à ses bornes.

Pour donner un ordre de grandeur, ce système permet d'envisager un "temps de retour" à l'état décoloré de l'ordre de la minute pour un vitrage rectangulaire de dimensions 40 x 80 cm², et de l'ordre d'au plus quelques dizaines de secondes pour un vitrage de 10 x 18 cm², soit approximativement la taille d'un rétroviseur d'automobile.

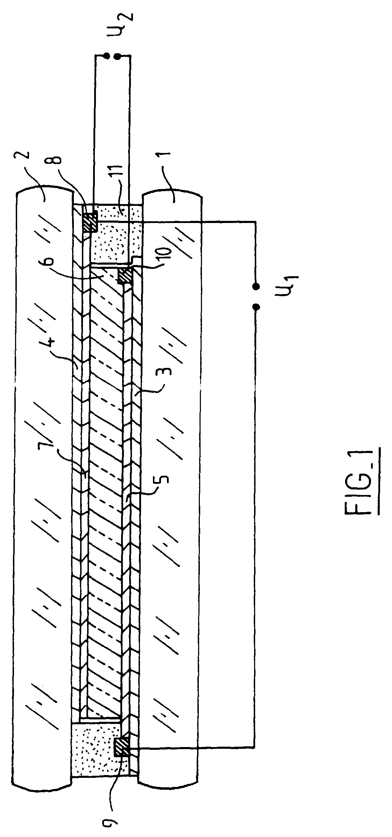

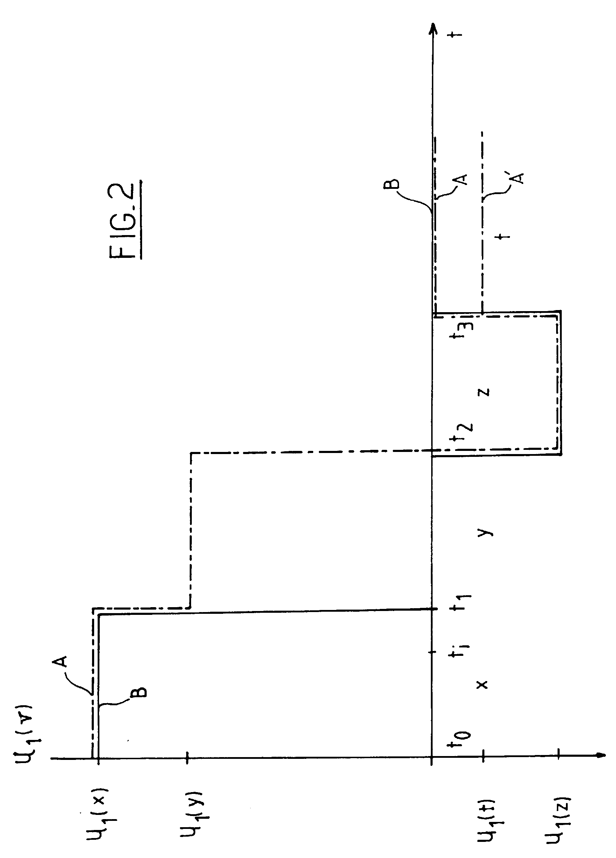

D'autres détails et caractéristiques avantageuses de l'invention ressortent de la description ci-après d'un mode de réalisation préféré, en référence aux dessins annexés qui représentent :
- en figure 1 : une coupe transversale simplifiée des vitrages électrochromes selon l'invention,
- en figure 2 : l'évolution en fonction du temps de la tension appliquée lors d'un cycle de coloration-décoloration à un vitrage électrochrome selon l'invention.

La figure 1 représente une coupe transversale du vitrage électrochrome selon sa largeur, vitrage qui est muni soit d'un empilement de couches le faisant fonctionner par des réactions d'insertion/désinsertion de protons H⁺, soit d'un empilement de couches- le faisant fonctionner par des réactions d'insertion/désinsertion de cations Li⁺. Par souci de clarté, les rapports d'épaisseurs des différentes couches n'ont pas été respectés. En outre, n'est représenté le circuit d'alimentation électrique proprement dit que de manière extrêmement simplifiée, celui-ci pouvant être avantageusement celui de la demande de brevet européen précédemment mentionnée, selon un montage type potentiostat.

Le vitrage est constitué de deux substrats de verre 1, 2, de deux couches électroconductrices transparentes 3, 4, d'une électrode en matériau électrochrome cathodique 5, d'une couche d'électrolyte 6 et d'une contre-électrode 7 en matériau électrochrome anodique. Deux amenées de courant 8 et 9 sont prévues pour alimenter les couches conductrices 3, 4. Ce sont des bandes métalliques diagonalement opposées et parallèles à la longueur du vitrage. La troisième amenée 10 est dite point de référence et se trouve en vis-à-vis de l'amenée 8. Le joint 11 sert à la fois de conducteur électronique d'une couche électroconductrice à l'autre et de joint d'étanchéité pour l'ensemble des couches.

On impose entre les amenées de courant les plus proches (8, 9) une tension U₁ correspondant à un potentiel U₂ dit de consigne et mesuré entre l'amenée de courant 8 et le point de référence 10, conformément à la demande EP-A-408 427 à laquelle on se rapportera pour plus de détails.

Dans le mode de réalisation préféré représenté à la figure 1, le joint 11, à la fois conducteur et garantissant l'étanchéité, est disposé de manière a être en contact avec les amenées 8 et 9. Cependant, on voit à la figure 1 que les couches électroconductrices 3, 4 sont disposées selon la longueur du vitrage de manière à ce que le joint conducteur 11 ait d'une part une large surface de contact avec l'une des couches électroconductrices et d'autre part une large surface de contact directe avec le substrat de verre opposé. (Il suffit d'utiliser, lors du dépôt des couches 3, 4, des "masques" pour obtenir cette configuration). On recommande également d'éviter que ce joint 11 ne recouvre simultanément l'amenée de courant 8 et le point de référence 10. Ainsi, on met au point un "chemin électrique" entre les couches électroconductrices 3, 4 sans pour autant provoquer de court-circuit direct intempestif entraînant la détérioration du système à la longue.

A titre indicatif, on précise les caractéristiques de chacun des matériaux utilisés dans les différentes couches de trois empilements susceptibles d'être utilisés dans les vitrages de la figure 1.

### EXEMPLE 1

L'empilement suivant fonctionne par insertion/désinsertion de protons H⁺ au niveau de l'électrode 5 et de la contre-électrode 7, utilisant un électrolyte 6 solide conducteur de protons :
- substrats en verre 1,2 : feuilles de verre float de 1,5 mm d'épaisseur, de dimensions 10 x 18 cm².
- couches électroconductrices 3,4 : oxyde d'indium dopé à l'étain, déposé par pulvérisation cathodique magnétron, d'épaisseur 400 nanomètres et de résistance carrée inférieure ou égale à 5 ohms,
- matériau électrochrome cathodique 5 : oxyde de tungstène WO₃ déposé par pulvérisation cathodique magnétron réactive à partir d'une cible en tungstène en présence d'oxygène sous une pression de 20 millitorrs (soit 2,66 Pa).
- matériau électrochrome anodique 7 : oxyde d'iridium, déposé par pulvérisation cathodique assistée par champ magnétique, sous une pression de 6 millitorrs (soit 0,8 Pa) d'un mélange gazeux oxygène/hydrogène dans un rapport volumique 80/20, d'épaisseur 55 nanomètres,
- électrolyte 6 : solution solide d'acide phosphorique anhydre dans du polyoxyéthylène, d'épaisseur 50 micromètres, de conductivité à 20°C de 9.10⁻⁵ ohm⁻¹.cm⁻¹ et de transmission lumineuse supérieure à 85 %. Il est préparé de la manière suivante : dans des conditions anhydres, on dissout par litre de solvant de l'acide phosphorique anhydre (21,5 g) et du polyoxyéthylène de masse moléculaire 5 000 000 (densité 1,21 ; température de transition vitreuse -40°C ; rapport O/H du nombre d'atomes d'oxygène du polymère sur le nombre d'atomes d'hydrogène de l'acide égal à 0,66). Le solvant est un mélange 60/40 en volume d'acétonitrile et de tétrahydrofurane.

La solution est coulée sous atmosphère à taux d'humidité contrôlé (inférieur ou égal à 50 ppm d'eau) par la méthode du tire-film sur le substrat recouvert de l'une ou l'autre des couches de matériau électrochrome. On évapore ensuite le solvant à température ambiante sous air sec pendant 20 h.

### EXEMPLE 2

L'empilement suivant fonctionne par insertion/désinsertion de cations Li⁺ dans l'électrode 5 et la contre-électrode 7, utilisant un électrolyte 6 solide conducteur de Li⁺ :

Les substrats en verre 1, 2 les couches électroconductrices 3, 4 et l'électrode 5 sont identiques à ceux de l'exemple 1.
- matériau électrochrome anodique 7 : oxyde de nickel, déposé par pulvérisation cathodique assistée par champ magnétique en opérant sur une cible de nickel mince sous une tension de 250 V, avec un gaz plasmagène d'une pression de 3,33 Pa et un rapport oxygène/hydrogène de 80/20, selon l'enseignement de la demande EP-A-0 373 020. L'épaisseur de la couche 7 est d'environ 80 nm.
- électrolyte 6 : solution solide de perchlorate de lithium dans du polyoxyde d'éthylène, d'environ 50 micromètres d'épaisseur, selon la demande de brevet EP-A-0 013 199.

### EXEMPLE 3

Il est identique à l'exemple 2, seule est modifiée la nature de l'électrolyte 6, qui est sous forme de gel :
- électrolyte 6 : gel conducteur au lithium obtenu à partir d'un alcoxyde de titane selon la demande de brevet FR-A-2 593 321.

Dans ces trois exemples et selon l'invention le joint 11 est en caoutchouc butyl et/ou polyisobutylène dans lequel sont dispersées des particules de noir de carbone. Sa conductivité électronique est comprise entre 1 et 10³ ohm⁻¹. cm⁻¹, et ici de préférence d'environ 10⁺² ohm⁻¹. cm⁻¹.

Le pourcentage volumique des particules de noir de carbone par rapport à l'ensemble du polymère et des particules est compris entre 10 et 20 % et de préférence entre 14 et 18 %.

L'assemblage des vitrages selon les exemples 1 à 3 est effectué par exemple selon l'enseignement de la demande de brevet français n° 90 11 419 déposée le 14 Septembre 1990 et correspondant à la demande européenne EP-A-477 065. Avant son fluage, ce joint se présente sous la forme d'un ruban de section rectangulaire 3 x 4 mm². Il peut aussi être de section cylindrique.

La figure 2, qui représente un graphe indiquant, en fonction du temps, la différence de potentiel U₁(t) imposée entre les amenées de courant 8 et 9 lors d'un cycle complet de coloration-décoloration, va permettre d'expliciter le fonctionnement des vitrages selon l'invention (courbes A, A') par rapport à celui des vitrages décrits dans la demande européenne EP-A-408 427 (courbe B).

Ce graphe distingue quatre phases x, y, z, t : la phase x est la phase de coloration, la phase y la phase de maintien en l'état coloré, la phase z la phase de décoloration et la phase t la phase de maintien de l'état décoloré.

En fonctionnement connu, c'est-à-dire quand les vitrages ne sont pas munis du joint conducteur selon l'invention (courbe B), lors de la phase x de coloration, une tension U₁(x) est maintenue en palier à une valeur de - 1,6 volts si on utilise l'empilement de l'exemple 1 ; à une valeur d'environ - 2 volts, si l'on utilise l'empilement de l'exemple 2, et à une valeur d'environ - 1,8 volt si l'on utilise l'empilement de l'exemple 3, ces empilements étant alors dépourvus du joint conducteur 11 selon l'invention. Puis, lorsque le degré de coloration voulu est obtenu, on cesse d'appliquer cette tension, on maintient alors l'oxyde de tungstène coloré en phase y, phase lors de laquelle, si elle se prolonge plusieurs jours, l'oxyde de tungstène tend à retourner à un état quasi décoloré par un phénomène d'auto-décharge parasitaire.

En phase de décoloration z, on impose de nouveau une tension U₁ de polarité inverse de + 0,6 volt en palier avec l'empilement de l'exemple 1, de + 1 volt avec l'empilement de l'exemple 2, de + 0,8 volt avec l'empilement de l'exemple 3, tous exempts du joint conducteur 11. Lorsque l'état décoloré voulu est obtenu, la tension revient à une valeur nulle, et l'oxyde de tungstène se maintient en phase t décolorée stable.

Le fonctionnement selon l'invention (courbes A, A') où cette fois on utilise les empilements des exemples 1 à 3 munis du joint conducteur 11 selon la figure 1, est différent.

En phase de coloration x, on impose une tension U₁(x) pendant un même laps de temps tₒ-t₁, tout comme précédemment, de manière à ne pas dépasser la limite de stabilité électrochimique des matériaux électrochromes, tout au moins au niveau de leurs zones périphériques qui sont instantanément soumis à cette valeur de U₁ sans aucune perte ohmique. Mais comme corollaire, la coloration au niveau des bords du vitrage correspondant à sa largeur accuseront un léger retard par rapport à un fonctionnement usuel.

En fin de phase de coloration x, au temps t₁, il peut persister une légère inhomogénéité de coloration entre les bords correspondant à la largeur et le reste du vitrage, inhomogénéité d'autant plus indiscernable que la conductivité du joint 11 n'est pas trop élevée. Dans la gamme de conductivité pré-citée, cette différence est à peine perceptible et n'entraîne aucun inconvénient notable.

En phase y de maintien de coloration, entre les moments t₁ et t₂, il faut cette fois, pour maintenir le degré de coloration indiqué par la courbe At₁, imposer une tension U₁(y) non nulle (figure 2) et de préférence proche de la tension d'équilibre thermodynamique du couple d'oxydoréduction en question, et notamment pour le couple WO₃/IrOy, d'environ - 1,2 V.

En phase z de décoloration, la tension U₁(z) est égale à la tension appliquée en fonctionnement habituel, pour les mêmes raisons que lors de la phase de coloration x.

En phase t de maintien à l'état décoloré, deux possibilités s'offrent : on peut (courbe A) imposer une tension nulle, la phase décolorée correspondant à l'état électrochimique stable du système, ou (courbe A') imposer une tension non nulle, d'environ 0,2 à 0,3 volt par exemple, de manière continue, de manière à obtenir une décoloration légèrement plus importante.

Avec ce système électrochrome, si une panne dans le réseau électrique se produit, le vitrage retourne à un état décoloré en moins de 15 secondes. Cet état décoloré est toutefois légèrement moins clair que l'état décoloré obtenu en imposant la tension U₁(z) lors de la phase z du fonctionnement normal (figure 2, courbe B), car cet état d'auto-stabilité du couple oxydo-réducteur ne le conduit pas absolument entièrement à son état le plus transparent. Cependant, la visibilité est largement suffisante.

Ainsi, lorsque le système se décharge par son joint conducteur en cas de défaut d'alimentation, il atteint une valeur de transmission lumineuse T_{L} d'environ 55 %, alors que cette valeur est légèrement supérieure, d'environ 60 % lorsque sa décoloration s'effectue lors de son fonctionnement normal. (On rappelle que lorsque le matériau électrochrome est dans son état coloré, sa transmission lumineuse T_{L} s'abaisse jusqu'à 10 %).

Il est clair que si ce graphe représente un cycle particulier, faisant passer le matériau d'un état totalement décoloré à un état totalement coloré, l'invention s'applique également sans difficulté au passage d'un degré de coloration à un autre, en appliquant une tension plus faible et/ou pendant un temps de commutation plus court. De même, l'invention n'est pas limitative de phases de commutation x et z où la tension U₁ varie par palier en "tout ou rien". La différence réside selon l'invention dans le fait que l'on adapte l'alimentation électrique en fonction de la décharge provoquée et maîtrisée, et dont le choix dépend des exigences de l'utilisateur. Ainsi, un éventuel léger contraste de coloration entre les bords et le reste du vitrage peut être perçu comme gênant, comme indifférent (notamment si les bords sont masqués lors du montage du vitrage sur un bâtiment ou un véhicule) ou même comme décoratif. On ajoute en outre que si dans le cas des empilements à transfert protonique, il n'est pas souhaitable dans le cadre de l'invention d'imposer des tensions U₁(x) et U₁(z) supérieures à celles imposées habituellement afin de ne pas risquer de détériorer les matériaux électrochromes à leur périphérie, en revanche dans le cas des empilements à transfert de cations lithium Li⁺, ce point est moins critique et il peut être envisagé d'imposer des valeurs légèrement supérieures (en valeurs absolues) de tensions U₁(x) et U₁(z).

On pourrait en outre aisément envisager d'imposer une différence de potentiel qui tienne compte, outre de la décharge par court-circuit à travers le matériau conducteur électronique de l'invention, éventuellement aussi de l'auto-décharge intrinsèque aux systèmes électrochromes, qui, bien que d'ampleur bien moindre, pourraît être perçue comme gênante dans le cas où les vitrages sont destinés à rester colorés durant de très longues périodes.

Grâce à l'invention, on remédie donc facilement à un inconvénient des systèmes électrochromes : le blocage du matériau électrochrome dans son état de coloration donné en cas de défaut d'alimentation électrique, et pour cela l'invention utilise avantageusement un phénomène de décharge, qui jusque là était considéré comme allant à l'encontre d'un fonctionnement satisfaisant d'un système électrochrome usuel.

On pourrait, sans sortir du cadre de l'invention, appliquer l'invention à un système électrochrome dont l'état de stabilité électrochimique correspond non plus à l'état décoloré, mais à l'état coloré, la création de la décharge permettant ainsi un retour à l'état coloré en cas de panne électrique.

Le vitrage électrochrome selon l'invention trouve ainsi application aussi bien pour équiper des bâtiments en fonctionnant en transmission, que pour équiper des véhicules type train, avion. En outre, il peut fonctionner en réflexion, notamment en tant que rétroviseur.

## Revendications

1. Vitrage électrochrome comportant deux feuilles de verre (1, 2) revêtues chacune d'une couche électroconductrice transparente (3, 4), séparées successivement par une électrode en matériau électrochrome (5), un électrolyte (6) et une contre-électrode (7), lesdites couches électroconductrices (3, 4) étant reliées par au moins deux amenées de courant (8, 9) à un système d'alimentation électrique générant une différence de potentiel (U₁) en fonction de la modification de la coloration du matériau électrochrome voulue, caractérisé en ce que ces couches électroconductrices (3, 4) sont d'autre part reliées l'une à l'autre au niveau d'au moins une partie de leur périphérie par l'intermédiaire d'un matériau (11) conducteur électronique.

2. Vitrage électrochrome selon la revendication 1, caractérisé en ce que son système d'alimentation électrique possède deux amenées de courant (8, 9) et un point de référence (10) selon un montage type potentiostat.

3. Vitrage électrochrome selon la revendication 1 ou 2, caractérisé en ce que le matériau (11) conducteur électronique comporte une matrice polymérique dans laquelle sont noyées des particules conductrices électroniques.

4. Vitrage électrochrome selon la revendication 3, caractérisé en ce que la matrice polymérique du matériau (11) conducteur électronique est à base de caoutchouc butyl et/ou polyisobutylène, de polysulfure ou de polyuréthane.

5. Vitrage électrochrome selon la revendication 3 ou 4, caractérisé en ce que les particules conductrices du matériau (11) conducteur électronique sont à base de graphite comme du noir de carbone, du noir d'acétylène et/ou sont métalliques.

6. Vitrage électrochrome selon l'une des revendications 3 à 5, caractérisé en ce que le pourcentage volumique des particules conductrices par rapport à l'ensemble desdites particules et de la matrice polymérique est compris entre 10 et 20 %.

7. Vitrage électrochrome selon l'une des revendications précédentes, caractérisé en ce que le matériau (11) a une conductivité électronique comprise entre 10⁻¹ et 10⁺³ ohm⁻¹.cm⁻¹ et de préférence d'environ 10⁺² ohm⁻¹.cm⁻¹.

8. Vitrage électrochrome selon l'une des revendications précédentes, caractérisé en ce que le matériau (11) conducteur électronique relie les deux couches électroconductrices (3, 4) sur la totalité de la périphérie du vitrage.

9. Vitrage électrochrome selon l'une des revendications précédentes, caractérisé en ce que le matériau (11) conducteur électronique est en contact, au moins en partie, avec au moins les deux amenées de courant (8, 9).

10. Vitrage électrochrome selon l'une des revendications 7 ou 8, caractérisé en ce que le matériau (11) conducteur électronique remplit également la fonction de joint d'étanchéité à l'eau liquide et/ou vapeur, de nature thermoplastique et contenant également de préférence un désséchant type tamis moléculaire.

11. Vitrage électrochrome selon l'une des revendications précédentes, caractérisé en ce que la différence de potentiel U₁ et la puissance d'alimentation imposées aux couches électroconductrices (3, 4) lors d'une phase de coloration ou décoloration de la couche (5) de matériau électrochrome ou lors du maintien à une coloration donnée de ladite couche (5), sont adaptées afin de tenir compte du transfert électronique d'une couche électroconductrice à l'autre par le matériau (11) à conducteur électronique.

12. Vitrage électrochrome selon la revendication 10, caractérisé en ce qu'en cas de défaut d'alimentation électrique ou du réseau électrique, le matériau (11) présente la conductivité électronique suffisante pour que la liaison électrique qu'il assure entre les deux couches électroconductrices (3, 4) impose un retour de la couche (5) de matériau électrochrome à un état décoloré en un laps de temps approximativement égal au laps de temps nécessaire pour que la couche (5) de matériau électrochrome passe de l'état décoloré à l'état coloré sous l'effet d'une différence de potentiel, et est notamment de l'ordre d'une minute.

13. Vitrage selon l'une des revendications 11 ou 12, caractérisé en ce que la différence de potentiel U₁ imposée aux couches électroconductrices (3, 4) lors des phases de coloration (x) et décoloration (z) reste dans les limites de stabilité électrochimique de l'électrode (5) et de la contre-électrode (7), en ce que ladite différence de potentiel U₁ imposée lors de la phase de maintien à l'état coloré (y) est proche de la valeur de la tension d'équilibre thermodynamique de l'électrode (5) et contre-électrode (7) et en ce que, lors de la phase de maintien à l'état décoloré (t), la différence de potentiel U₁ est nulle ou non.

14. Vitrage électrochrome selon l'une des revendications précédentes, caractérisé en ce qu'il fonctionne par réactions d'insertion/désinsertion de protons, notamment à l'aide d'une électrode (5) en oxyde de tungstène, d'une contre-électrode (7) en oxyde d'iridium et d'un électrolyte (6) conducteur de protons tel qu'une solution solide de polyoxyde d'éthylène et d'acide phosphorique.

15. Vitrage électrochrome selon l'une des revendications 1 à 13, caractérisé en ce qu'il fonctionne par réactions d'insertion/désinsertion de cations lithium, notamment à l'aide d'une électrode (5) en oxyde de tungstène, une contre-électrode (7) à base d'oxyde de nickel et un électrolyte (6) conducteur de cations lithium soit composé d'une solution solide de perchlorate de lithium et de polyoxyde d'éthylène, soit composé d'un gel à partir d'un alcoxyde de titane.

16. Application du vitrage électrochrome selon l'une des revendications précédentes à un vitrage fonctionnant en transmission pour le bâtiment, pour des véhicules tels que des trains, avions, ou à un vitrage fonctionnant en réflexion tel qu'un rétroviseur pour automobiles.

## Patentansprüche

1. Elektrochrome Verglasung, welche zwei Glasscheiben (1, 2), umfaßt, die jeweils mit einer elektrisch leitfähigen transparenten Schicht (3, 4) überzogen und aufeinander folgend durch eine Elektrode (5) aus elektrochromem Material, einen Elektrolyten (6) und eine Gegenelektrode (7) getrennt sind, wobei die elektrisch leitfähigen Schichten (3, 4) durch mindestens zwei Stromzuführungen (8, 9) an ein elektrisches Versorgungssystem angeschlossen sind, das in Abhängigkeit von der gewünschten Veränderung der Färbung des elektrochromen Materials eine Potentialdifferenz (U₁) erzeugt, **dadurch gekennzeichnet, daß** diese elektrisch leitfähigen Schichten (3, 4) andererseits auf wenigstens einem Teil ihres Umfangs über ein elektronenleitendes Material (11) miteinander verbunden sind.

2. Elektrochrome Verglasung nach Anspruch 1, **dadurch gekennzeichnet, daß** ihr elektrisches Versorgungssystem wzei Stromzuführungen (8, 9) und einen Bezugspunkt (10) gemäß einem potentiostatischen Aufbau besitzt.

3. Elektrochrome Verglasung nach Anspruch 1 oder 2, **dadurch gekennzeichnet, daß** das elektronenleitende Material (11) eine Polymermatrix enthält, in welcher elektrisch leitfähige Teilchen eingebettet sind.

4. Elektrochrome Verglasung nach Anspruch 3, **dadurch gekennzeichnet, daß** die Polymermatrix des elektronenleitenden Materials (11) Butylkautschuk und/oder Polyisobutylen, Polysulfid oder Polyurethan zur Grundlage hat.

5. Elektrochrome Verglasung nach Anspruch 3 oder 4, **dadurch gekennzeichnet, daß** die leitfähigen Teilchen des elektronenleitenden Materials (11) Graphit wie Ruß und Acetylenruß zur Grundlage haben und/oder metallisch sind.

6. Elektrochrome Verglasung nach einem der Ansprüche 3 bis 5, **dadurch gekennzeichnet, daß** der Volumenprozentanteil der leitfähigen Teilchen, bezogen auf die Gesamtheit aus diesen Teilchen und der Polymermatrix, 10 bis 20 % beträgt.

7. Elektrochrome Verglasung nach einem der vorhergehenden Ansprüche, **dadurch gekennzeichnet, daß** das Material (11) eine elektrische Leitfähigkeit von 10⁻¹ bis 10⁺³ ohm⁻¹·cm⁻¹ und vorzugsweise von etwa 10⁺² Ohm⁻¹·cm⁻¹ besitzt.

8. Elektrochrome Verglasung nach einem der vorhergehenden Ansprüche, **dadurch gekennzeichnet, daß** die beiden elektrisch leitfähigen Schichten (3, 4) über den gesamten Umfang der Verglasung durch das elektronenleitende Material (11) verbunden werden.

9. Elektrochrome Verglasung nach einem der vorhergehenden Ansprüche, **dadurch gekennzeichnet, daß** das elektronenleitende Material (11) wenigstens teilweise mit mindestens den beiden Stromzuführungen (8, 9) Kontakt hat.

10. Elektrochrome Verglasung nach Anspruch 7 oder 8, **dadurch gekennzeichnet, daß** das elektronenleitende Material (11) auch die Aufgabe einer thermoplastischen Dichtung gegen Wasser und/oder Dampf übernimmt und außerdem vorzugsweise ein Trockenmittel vom Typ eines Molekularsiebes enthält.

11. Elektrochrome Verglasung nach einem der vorhergehenden Ansprüche, **dadurch gekennzeichnet, daß** die Potentialdifferenz U₁ und die Versorgungsleistung, welche an die elektrisch leitfähigen Schichten (3, 4) während einer Färbungs- oder Entfärbungsphase der Schicht (5) aus elektrochromem Material oder während der Aufrechterhaltung einer gegebenen Färbung dieser Schicht (5) angelegt werden, angepaßt sind, um den Elektronenübergang von einer elektrisch leitfähigen Schicht zur anderen durch das elektronenleitende Material (11) zu berücksichtigen.

12. Elektrochrome Verglasung nach Anspruch 10, **dadurch gekennzeichnet, daß** bei Ausfall der elektrischen Versorgung oder des Stromnetzes das Material (11) eine ausreichende elektrische Leitfähigkeit besitzt, damit die elektrische Verbindung, die es zwischen den beiden elektrisch leitfähigen Schichten (3, 4) sicherstellt, eine Rückkehr der Schicht (5) aus elektrochromem Material in einen entfärbten Zustand innerhalb eines Zeitraums erzwingt, der etwa gleich dem Zeitraum ist, der erforderlich ist, damit die Schicht (5) aus elektrochromem Material unter dem Einfluß einer Potentialdifferenz vom entfärbten in den gefärbten Zustand übergeht und insbesondere etwa eine Minute beträgt.

13. Verglasung nach Anspruch 11 oder 12, **dadurch gekennzeichnet, daß** die Potentialdifferenz U₁, welche an die elektrisch leitfähigen Schichten (3, 4) während den Färbungs- (x) und den Entfärbungsphasen (z) angelegt wird, innerhalb der elektrochemischen Stabilitätsgrenzen der Elektrode (5) und der Gegenelektrode (7) bleibt **und daß** diese Potentialdifferenz U₁, die während der Haltephase im gefärbten Zustand (y) angelegt wird, etwa gleich dem Wert der thermodynamischen Gleichgewichtsspannung von Elektrode (5) und Gegenelektrode (7) ist **und daß** während der Haltephase im entfärbten Zustand (t) die Potentialdifferenz U₁ gleich Null oder nicht vorhanden ist.

14. Elektrochrome Verglasung nach einem der vorhergehenden Ansprüche, **dadurch gekennzeichnet, daß** sie durch Einlagerungs-/Auslagerungsreaktionen von Protonen, insbesondere mittels einer Wolframoxidelektrode (5), einer Iridiumoxid-Gegenelektrode (7) und eines protonenleitenden Elektrolyten (6) wie einer festen Lösung von Phosphorsäure in Polyethylenoxid, arbeitet.

15. Elektrochrome Verglasung nach einem der Ansprüche 1 bis 13, **dadurch gekennzeichnet, daß** sie durch Einlagerungs-/Auslagerungsreaktionen von Lithiumkationen, insbesondere mittels einer Wolframoxidelektrode (5), einer Gegenelektrode (7) auf der Grundlage von Nickeloxid und eines Lithiumkationenleitenden Elektrolyten (6), der entweder aus einer festen Lösung von Lithiumperchlorat in Polyethylenoxid oder aus einem Gel ausgehend von einem Titanalkoxid zusammengesetzt ist, arbeitet.

16. Verwendung der elektrochromen Verglasung nach einem der vorhergehenden Ansprüche als eine mit Lichtdurchgang funktionierende Verglasung für Gebäude und für Fahrzeuge wie Eisenbahnzüge und Flugzeuge oder als eine unter reflektiertem Licht funktionierende Verglasung wie ein Rückspiegel für Kraftfahrzeuge.

## Claims

1. Electrochromic pane comprising two glass sheets (1, 2), each coated with a transparent electrically conducting film (3, 4), separated successively by an electrode of electrochromic material (5), an electrolyte (6) and a counter-electrode (7), said electrically conducting films (3, 4) being connected by at least two electrical supply leads (8, 9) to an electrical supply system generating a potential difference (U₁) as a function of the desired modification to the colouration of the electrochromic material, characterized in that these electrically conducting films (3, 4) are also connected to each other at at least a portion of their periphery by means of an electron conducting material (11).

2. Electrochromic pane according to Claim 1, characterized in that its electrical supply system possesses two electrical leads (8, 9) and a reference point (10) in an arrangement of the potentiostat type.

3. Electrochromic pane according to Claim 1 or 2, characterized in that the electron conducting material (11) comprises a polymeric matrix, in which electron conducting particles are embedded.

4. Electrochromic pane according to Claim 3, characterized in that the polymeric matrix of the electron conducting material (11) is based upon butyl rubber and/or polyisobutylene, polysulphide or polyurethane.

5. Electrochromic pane according to Claim 3 or 4, characterized in that the conducting particles of the electron conducting material (11) are based upon graphite, such as carbon black, acetylene black and/or are of metal.

6. Electrochromic pane according to one of Claims 3 to 5, characterized in that the percentage by volume of the conducting particles relative to the totality of said particles and the polymeric matrix is from 10 to 20%.

7. Electrochromic pane according to one of the preceding Claims, characterized in that the material (11) has an electron conductivity lying between 10⁻¹ and 10⁺³ohm⁻¹ .cm⁻¹ and preferably of approximately 10⁺²ohm⁻¹. cm⁻¹.

8. Electrochromic pane according to one of the preceding Claims, characterized in that the electron conducting material (11) connects together the two electrically conducting films (3, 4) over the totality of the periphery of the pane.

9. Electrochromic pane according to one of the preceding Claims, characterized in that the electron conducting material (11) is in contact, at least partly, with at least the two electrical supply leads (8, 9).

10. Electrochromic pane according to one of Claims 7 or 8, characterized in that the electron conducting material (11) also fulfils the function of a mechanical seal against water in liquid and/or vapour form, of a thermoplastics nature and also containing, preferably, a desiccant of the molecular sieve type.

11. Electrochromic pane according to one of the preceding Claims, characterized in that the potential difference U₁ and the supply power applied to the electrically conducting films (3, 4) during a colouration or decolouration phase of the film (5) of electrochromic material or during the maintenance of a given colouration of said film (5), are adapted so as to take account of the electron transfer from one electrically conducting film to the other through the electron conducting material (11).

12. Electrochromic pane according to Claim 10, characterized in that, in the case of a defect or failure of the electrical feed or electrical supply grid, the material (11) has a sufficient electron conductivity for the electrical connection which it assures between the two electrically conducting films (3, 4) to cause a return of the film (5) of electrochromic material to a decoloured state in a period of time approximately equal to the time necessary for the film (5) of electrochromic material to pass from the decoloured state to the coloured state under the effect of a potential difference, and is notably of the order of one minute.

13. Pane according to one of Claims 11 or 12, characterized in that the potential difference U₁ applied to the electrically conducting films (3, 4) during the phases of colouration (x) and decolouration (z) remains within the limits of electrochemical stability of the electrode (5) and of the counter-electrode (7), in that said potential difference U₁ applied during the holding phase in the coloured state (y) is close to the value of the thermodynamic equilibrium voltage of the electrode (5) and counter-electrode (7) and in that, during the phase of holding in the decoloured state (t), the potential difference U₁ is or is not zero.

14. Electrochromic pane according to one of the preceding Claims, characterized in that it functions by insertion/de-insertion reactions of protons, notably by means of an electrode (5) of tungsten oxide, of a counter-electrode (7) of iridium oxide and of a proton-conducting electrolyte (6) such as a solid solution of polyethylene oxide and phosphoric acid.

15. Electrochromic pane according to one of Claims 1 to 13, characterized in that it functions by insertion/de-insertion reactions of lithium cations, notably by means of an electrode (5) of tungsten oxide, a counter electrode (7) based upon nickel oxide and an electrolyte (6) conductive of lithium cations, either composed of a solid solution of lithium perchlorate and polyethylene oxide, or composed of a gel from a titanium alkoxide.

16. Application of the electrochromic pane according to one of the preceding Claims to a pane functioning in transmission for building, for vehicles such as trains, aircraft, or to a pane functioning in reflection, such as a rearview mirror for automobiles.
